# EUROPÄISCHE PATENTANMELDUNG

(11) **EP 0 856 345 A1**
(43) Veröffentlichungstag der Anmeldung: **05.08.1998**
(21) Anmeldenummer: 98250039.9
(22) Anmeldetag: 02.02.1998
(51) Int. Cl.: B01D 19/00, C02F 1/20, E03F 5/08

(54) **Anordnung zur Entfernung von Gasen aus Grund- und/oder Abwasser**

(30) Priorität: 03.02.1997 DE 19705052
(71) Anmelder: HWG Havelländische Wasser GmbH & Co. KG, 14473 Potsdam (DE)
(72) Erfinder: Kelm, Siegfried, Dipl.-Ing., 14612 Falkensee (DE)
(74) Vertreter: Göbel, Claus

(57) **Zusammenfassung**

Die Erfindung betrifft eine Anordnung zur Entfernung von Gasen aus Grund- und/oder Abwässern mit anschließender biologischer Oxydation, speziell aus Auslaufschächten.

Am Ende einer Druckleitung (2) ist innerhalb eines Biofilters (1) eine Strahlpumpe (5), in eine Mischkammer (6) und anschließend ein Entspannungsraum (8) mit gasdurchlässigem Boden (10) zum Biofiltermaterial (11) angeordnet. Die Abflußleitung (2) vom Entspannungsraum (8) ist so angeordnet, daß immer eine Restmenge Wasser im Entspannungsraum (8) verbleibt. Von dem sich anschließenden Auslaufschacht (3) oder der Freispiegelleitung (4) wird eine Kanalluftleitung (12) in die Nähe der Strahlpumpe (5) zurückgeführt.

## Beschreibung

Die Erfindung betrifft eine Anordnung zur Entfernung von Gasen aus Grund- und/oder Abwässern mit anschließender biologischer Oxydation, speziell aus Wasserdruckleitungen und/oder aus Auslaufschächten von Wasserdruckleitungen und/oder Freispiegelleitungen.

Es ist bekannt, daß in Entwässerungsanlagen von häuslichen oder industriellen Abwasser mit langen Druckleitungen, z. B. zu Sammelkläranlagen und anschließenden Auslaufschächten oder Freispiegelleitungen das Abwasser über einen längeren Zeitraum sich einem Faulprozeß unterwirft.
Bei diesem Faulprozeß werden auch Gase erzeugt, die zum Teil toxisch sind und unangenehm riechen.

Es ist auch bekannt, daß Grundwasser, insbesondere in der Nähe von Siedlungsgebieten, Flüssen oder Deponien belastet sein kann. Bei der Förderung solcher belasteter Grundwasser aus Brunnen durch Druckleitungen entweichen bei der Entspannung der Wässer zum Teil Gase, die unangenehm riechen.

Um dieses möglichst weitgehend zu verhindern ist es Stand der Technik, das Abwasser in den Druckleitungen mit sauerstoffreicher Luft, meistens mittels Strahlpumpen, zu beladen, um den Faulprozeß zu verhindern. Die Entstehung von Faulgasen soll dadurch in annehmbaren Grenzen gehalten werden.

Vorrichtungen für ein solches Verfahren zur Beladung von Abwasser mit Sauerstoff wurden zum Beispiel in der DE-OS 3630103 beschrieben.
Auch die Zuführung von reinem Sauerstoff ist, wie in der DE-OS 2805622 beschrieben, bekannt. Als eine weitere Möglichkeit wurde auch die Zugabe von Chemikalien in der Literatur beschrieben.
Auch dieses zeigte nicht den gewünschten Erfolg und hat den großen Nachteil, daß durch diese Chemikalien die Umwelt zusätzlich belastet wird und eventuell sogar in den Kläranlagen mit aufbereitet werden müssen.

Alle diese Verfahren haben den großen Nachteil, daß sie nicht verhindern können, daß mindestens ein geringer Anteil von fauligen, toxischen und stinkenden Gasen sich bildet. Diese sich bildenden fauligen, toxischen und stinkenden Gase entweichen spätestens nach dem Verlassen der Wasserdruckleitung beim Entspannen im Auslaufschacht oder beim anschließenden Verweilen der Grund- und/oder Abwässer in der Freispiegelleitung und gelangen somit durch die Kanalisationsschächte auch nach außen in die Umwelt.
Damit bedeuten sie nicht nur eine Belastung für die Umwelt sondern, sofern diese Auslauf- und/oder Kanalisationsschächte sich in der Nähe von Ansiedlungen befinden, auch eine erhebliche Beeinträchtigung der Wohnqualität.

Es ist auch bekannt, um die Geruchsbelästigung möglichst weitgehend zu unterbinden, am Ende von Abwasserdruckleitungen Erd- oder Kompostfilter zur Filterung der Abluft anzuordnen. Auch die zusätzliche Anordnung dieser Biofilter konnte eine Geruchsbelästigung nicht ausreichend verhindern, da in dem anschließendem Auslaufschacht sich immer noch ausreichend Gase aus der Freispiegelleitung sammeln, da die Verweilzeit der Grund- und Abwässer in diesen Freispiegelleitungen entsprechend dem Gefälle bzw. der Menge, die in einer bestimmten Zeiteinheit abfließt, doch erheblich sein kann. Die Verweilzeit kann somit mehrere Stunden / Tage betragen.

Bei diesem Stand der Technik liegt der Erfindung die Aufgabe zugrunde, eine Vorrichtung der eingangs genannten Art derart anzuordnen, daß die in den Wasserdruckleitungen vorhandenen stinkenden und/oder toxischen Faulgase und die in den sich anschließenden Auslaufschächten und/oder Freispiegelleitungen sich noch sammelnden Faulgase umweltfreundlich und weitgehend beseitigt werden.

Diese Aufgabe wird erfindungsgemäß durch eine Anordnung gemäß den kennzeichnenden Merkmalen des Hauptanspruches und deren weiteren Ausgestaltung gemäß den weiteren Ansprüchen mit seinen kennzeichnenden Merkmalen gelöst.

Zur Erreichung der vorhergehend beschriebenen und anderer Ziele und in Übereinstimmung mit dem Zweck dieser Erfindung, wie in der Niederschrift detailliert aufgeführt, liefert die Anordnung eine geruchsfreie Abluft ohne das es zu Geruchsbelästigungen in der Nähe von Auslauf- oder Kanalschächten kommt, in dem die stinkenden und/oder toxischen Faulgase nach dem Austreten der Grund- und/oder Abwässer aus der Druckleitung durch eine intensive innere Verwirblung mit anschließender Entspannung in einem Entspannungsraum weitgehend aus dem Wasser sich trennen. Aufgrund des leichten Überdrucks im Entspannungsraum werden die Gase durch einen gasdurchlässigen Boden in den Raum mit dem bioaktiven Filtermaterial gedrückt und gelangen erst anschließend nach außen in die Umwelt.

Um eine hohe Aktivität des Filtermaterials und das Auswaschen der Oxydationsprodukte zu gewährleisten, muß eine optimale Feuchtigkeit im Biofilter garantiert werden, was durch periodisches und dosiertes Besprühen des Filtermaterials erreicht wird.

Die Grund- und Abwässer fließen über einen Ablauf zu einem Auslaufschacht und anschließend weiter in eine Freispiegelleitung. Der Ablauf am Boden des Entspannungsraumes ist erfindungsgemäß so angeordnet, so daß durch eine leichte Steigung des Ablaufes immer eine Restmenge Grund- und/oder Abwasser in dem Entspannungsraum verbleibt. Damit wird sichergestellt, daß durch die Restmenge Grund- und/oder Abwasser immer der erforderliche Druck im Entspannungsraum vorhanden ist, damit die Gase in den Raum mit dem Biofiltermaterial gedrückt werden und gleichzeitig die Gase durch den Abfluß nicht in den Auslaufschacht oder in die Freispiegelleitungen gelangen.

Ein eventuell geringfügiger verbleibender Rest von Faulgasen im Grund- und/oder Abwasser oder sich neu bildende Faulgase in der Abflußleitung und/oder Freispiegelleitung werden über eine Kanalluftleitung zwischen einem Auslaufschacht und/oder einer Freispiegelleitung durch den durch die Strahlpumpe für das Abwasser aus der Druckleitung sich bildende Unterdruck an der Öffnung der Kanalluftleitung in der Nähe der Strahlpumpe mit angesaugt.

Die Kanalgase gelangen durch die Mischkammer in den Entspannungsraum und werden gleichfalls über den Biofilter mit entsorgt.

In einer bevorzugten Ausführungsform wird die Aufgabe erfindungsgemäß durch eine Anordnung gelöst in der eine Wasserdruckleitung seitlich in einen Biofilter geführt wird und danach möglichst nahe an die obere Abdeckung, aus der die gefilterten Luft entweicht. Von hier wird das unter Druck stehende Grund- und/oder Abwasser nach unten durch eine Strahlpumpe geleitet, die möglichst nahe an der Abdeckung für den Luftaustritt des Biofilter angeordnet ist. Vorzugsweise werden als Strahlpumpen Düsen eingesetzt. Insbesondere kommen erfindungsgemäß Düsen zum Einsatz, die den Querschnitt des Druckzulaufes einengen, um durch die Erhöhung der Strahlgeschwindigkeit der Grund- und/oder Abwässer einen Unterdruck in deren Umgebung zu erzeugen, der ausreichend Kanal luft aus der Öffnung des in der Höhe der Strahlpumpe angeordneten Kanalluftleitung ansaugt.

Bevorzugterweise ist der Querschnitt der Düsenöffnung der Strahlpumpe beim Austritt dabei um die Hälfte bis vier Fünftel Kleiner als der Querschnitt des Druckzulaufes, damit einmal der sich bildende Unterdruck ausreichend groß ist, aber auch die sich im Abwasser befindenden Feststoffpartikel diese passieren können und es zu keinen Verstopfungen der Düse kommt.

In der bevorzugten Anordnung ist die Strahlpumpe möglichst weit oben, nahe an der Abdeckung des Biofilters, im Biofilter angeordnet, damit die sich anschließend bevorzugt vertikal nach unten angeordnete Mischkammer, möglichst lang ist und eine ausreichend intensive Verwirbelung der Grund- und/oder Abwässer gegeben ist.

Die in die Mischkammer aus der Strahlpumpe strömenden Grund-und/oder Abwässer werden hier innig verwirbelt und durchmischt. Hierbei trennen sich bereits schon erhebliche Mengen von den gelösten stinkenden und/oder toxischen Faulgasen aus den Wässern.

Zur Verstärkung des Mischprozeßes ist es in besonderer Weise vorteilhaft Einbauteile in der Mischkammer anzuordnen, damit eine besonders intensive Mischung erfolgt. Der Grund- und/oder Abwasserstrahl wird dabei durch die Einbauten mit dem entstehenden Unterdruck aufgerissen und strahlt nicht ungebremst auf die Abwasseroberfläche in dem Entspannungsraum, so daß eine besonders intensive Durchwirbelung stattfindet.

In einer Ausführungsform bestehen die Einbauteile aus Tellern, die mindestens einen Durchbruch aufweisen und konisch so geformt sind, daß sie von der Wandung der Mischkammer in die entgegengesetzte Richtung von der Strahlpumpe, also in Richtung des Wasserstrahles geformt sind. Diese Formgebung hat den Vorteil, daß einmal eine intensive Vermischung erfolgt und gleichzeitig ein Verstopfen der Durchbrüche an den Einbauten im wesentlichen ausgeschlossen werden kann.

In einer weiteren Ausführungsform erfolgt die Anordnung der Einbauteile in der Mischkammer mehrfach und bevorzugterweise in gleichmäßigen Abständen. Die Erfindung beschränkt sich jedoch nicht nur auf diese Anordnung der Einbauteile, auch andere sind möglich.

Die so gemischten und intensiv verwirbelten Grund- und/oder Abwässer und die mitgerissenen Gase und Kanalgase aus der Kanalluftleitung gelangen in den nach der Mischkammer nachgeordneten Entspannungsraum.

Bevorzugterweise ist dieser Entspannungsraum im normalen Betrieb mit Gasen gefüllt, die einem leichten Überdruck gegenüber dem Normaldruck der Außenwelt haben.
Durch den leichten Überdruck werden die Gase durch den gasdurchlässigen Boden des Biofilters in diesen gedrückt und durch ein üblicherweise bekanntes Filtermaterial gereinigt bzw. in nicht übelriechende Stoffe umgewandelt.
Nach dem Passieren des Filtermaterials entweicht das im wesentliche geruchslose Gas durch die Abluftleitung nach außen in die Umwelt.

Das in dem Entspannungsraum sich am Boden ansammelnde Grund-und/oder Abwasser, welches im wesentlichen von Gasen befreit ist, gelang über eine bevorzugterweise nahe am Boden angeordnete Abflußleitung in einen Auslaufschacht und/oder in eine Freispiegelleitung.

Erfindungsgemäß ist der Abfluß dabei so angeordnet, daß er leicht ansteigend ist. Es hat sich gezeigt, daß es vorteilhaft ist, den Anstieg der Abflußleitung nur soweit anzuheben, daß die Unterkante des Abflusses mindestens die Höhe der Oberkante des Abflusses am Ausgang aus dem Entspannungsraum hat, damit gewährleistet ist, daß der Entspannungsraum am Boden ständig soweit mit Grund- und/oder Abwasser bis zur Höhe der Abflußöffnung gefüllt ist, so daß keine Gase über die Abflußleitung entweichen können.

In einer weiteren Ausführungsform ist es auch möglich mehrere Abflußleitungen zu verlegen, wobei der Anstieg auch höher sein kann.

Falls in dem Grund- und/oder Abwasser noch ein geringer Anteil von gelösten Gasen enthalten ist, was nicht restlos verhindert werden kann, ist es möglich, daß diese sich entweder im Auslaufschacht und/oder in der Freispiegelleitung sammeln.

Durch die erfindungsgemäß angeordnete Kanalluftleitung zwischen dem Auslaufschacht und dem Biofilter wird die angesammelte Kanal luft durch den Unterdruck an der Öffnung der Kanalluftleitung in unmittelbarer Nähe der Strahlpumpe in die Mischkammer gesaugt.
Die Auslaufschachtabdeckung sollte dabei bevorzugterweise mindestens tagwasserdicht sein, aber auch eine noch höhere Dichtheit ist möglich.

In einer weiteren Ausführungsform ist es auch möglich, die Kanalluftleitung direkt von einer Freispiegelleitung zur Strahlpumpe anzuordnen. Auch hier werden die sich ansammelnden Kanalgase aus der Leitung entfernt, ohne nach außen ohne Filterung in die Umwelt zu gelangen.

Bevorzugterweise hat es sich gezeigt, daß erfindungsgemäß nicht nur eine Kanalluftleitung zwischen dem Auslaufschacht angeordnet wird, sondern wenn es die räumlichen Verhältnisse es zulassen, auch mehrere Kanalluftleitungen von Auslaufschächten und/oder Freispiegelleitungen zu der Strahlpumpe angeordnet werden.
Bevorzugterweise sollten hier die Öffnungen der einzelnen Kanalluftleitungen in der Nähe der Strahlpumpe ringförmig um diese angeordnet sein.

Weitere Vorteile und Einzelheiten ergeben sich aus der nachfolgenden Beschreibung unter Bezugnahme auf die beigefügte Zeichnung.

Die Erfindung soll nachstehend an einem Ausführungsbeispiel einer Anordnung zur Entfernung von Gasen aus Grund- und/oder Abwässer aus Wasserdruckleitungen und aus Auslaufschächten von Wasserdruckleitungen näher erläutert werden.

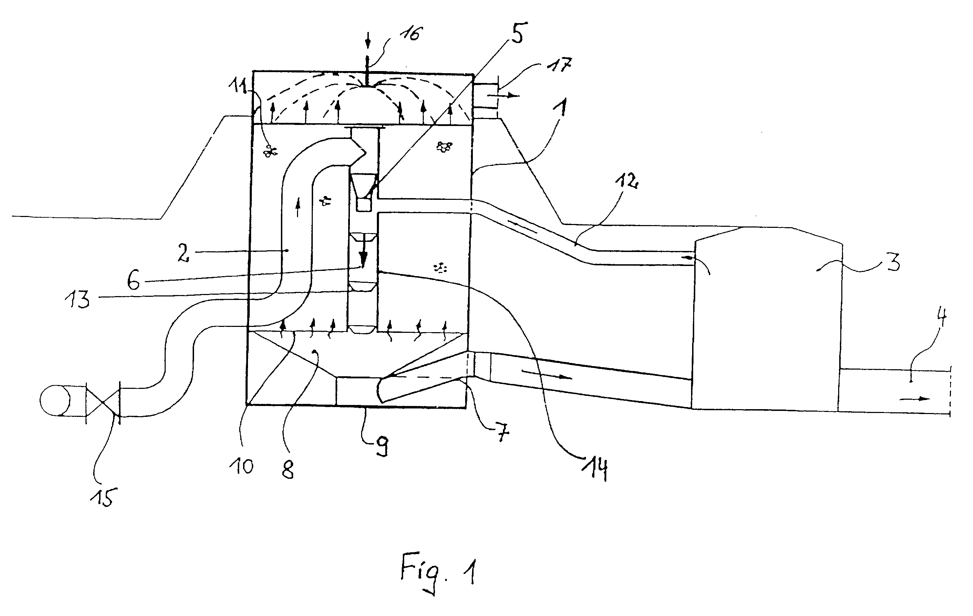

Es zeigt die Figur 1 ein Ausführungsbeispiel der Erfindung:
Fig.1: Längsschnitt durch die Anordnung

In der Figur 1 ist die erfinderische Anordnung für die Entfernung von Gasen aus Abwasser aus einer Wasserdruckleitung 2 und einem Wasserdruckleitungs-Auslaufschacht 3 dargestellt. Das Abwasser wird über eine Wasserdruckleitung 2 in den Biofilter 1 in der Ebene des Bodens des Entspannungsraumes 9 zugeführt und innerhalb des Biofilters 1 nach oben, unmittelbar an die Abdeckung des Filters 1 gegenüber der Außenluft geführt. Danach erfolgt die Führung des Abwassers vertikal in der Mitte des Biofilters 1 nach unten.
In der sich anschließenden Strahlpumpe 5 in Form einer Düse wird die Fließgeschwindigkeit des Abwassers wesentlich erhöht, so daß in der unmittelbaren Umgebung ein Unterdruck entsteht. Der Durchmesser der ringförmigen Düse der Strahlpumpe 5 beträgt dabei die Hälfte des Querschnittes der Wasserdruckleitung 2.
In der sich vertikal nach unten anschließenden Mischkammer 6, die in der Länge das Fünffache des Durchmessers aufweist, sind drei Einbauteile 13 in regelmäßigen Abständen angeordnet. Die Einbauteile 13 sind konisch geformte Teller, die in Strahlrichtung angeordnet sind und den Strahl aufreißen.

In dem sich anschließenden Entspannungsraum 8 prallt der Abwasserstrahl nach der intensiven Verwirbelung auf und dem Aufreißen auf die Oberfläche des sich am Boden 9 des Entspannungsraumes 8 befindlichen Abwassers, wobei der Abwasserstrahl die Gase aus dem Abwasser aus der Druckleitung 2 und der Kanalluftleitung 12, die sich in der Mischkammer 6 befinden, mitreißt.

In dem Entspannungsraum 8 beruhigt sich das Strömungs- und Verwirbelungsverhalten des Abwassers und die mit dem Abwasser verwirbelten Gase trennen sich und werden durch den leichten Überdruck durch den gasdurchlässigen Boden 10 in den Raum mit den Filtermaterial 11 gedrückt.
Das sich sammelnde Abwasser am Boden 9 des Entspannungsraumes 8 fließt über den Abfluß 7 zu dem Auslaufschacht 3 und der sich anschließenden Freispiegelleitung 4 ab.
Der Ablauf 7 ist dabei erfindungsgemäß so angeordnet, daß er eine Steigung hat, die genau so groß ist, daß die Unterkante der Ablaufleitung 7 die Höhe der Oberkannte der Ablaufleitung 7 an der Öffnung des Ablaufes 7 am Entspannungsraumes 8 erreicht.

Von dem Auslaufschacht 3 ist eine Kanalluftleitung 12 zur Strahlpumpe 5 im Biofilter 1 angeordnet. Durch diese Kanalluftleitung 12 wird die sich in dem Auslaufschacht 3 und in der Freispiegelleitung 4 sich ansammelnde Kanal luft angesaugt, da in unmittelbarer Nähe der Strahlpumpe 5 ein Unterdruck besteht. Damit kann aus der Abdeckung des Auslaufschachtes 3 im wesentlichen keine Kanalluft entweichen. Auf dem unverottbaren, kohlenstoffhaltigen Filtermaterial 11 siedeln sich bei optimalem Wassergehalt sessile Bakterien an, die die Reduktionsprodukte oxydieren.

Durch eine Sprühdüse 16 wird täglich mehrmals sauberes Wasser auf den Biofilter gegeben, um somit einen ständigen Abtransport der Oxydationsprodukte ( HSO³ , HNO³ ) zu garantieren.

In unmittelbarer Nähe des Biofilters 1 in der Wasserdruckleitung 2 ist ein Absperrorgan 14 angeordnet, damit bei Wartungsarbeiten der erfindungsgemäßen Anordnung die Zufuhr von Abwasser gesperrt werden kann.

### Aufstellung der verwendeten Bezugszeichen:

- 1 -: Biofilter
- 2 -: Wasserdruckleitung
- 3 -: Auslaufschacht
- 4 -: Freispiegelleitung
- 5 -: Strahlpumpe
- 6 -: Mischkammer
- 7 -: Abflußleitung
- 8 -: Entspannungsraum
- 9 -: Boden des Entspannungsraumes
- 10 -: gasdurchlässiger Boden
- 11 -: Filtermaterial
- 12 -: Kanalluftleitung
- 13 -: Einbauteil
- 14 -: Mischkammerwand
- 15 -: Absperrorgan
- 16 -: Sprühdüse
- 17 -: Abluftleitung

## Patentansprüche

1. Anordnung zur Entfernung von Gasen aus Grund- und/oder Abwässern mit anschließender biologischen Oxydation, aus Wasserdruckleitungen und /oder Wasserdruckleitungs-Auslaufschächten ( 3 ) und/oder Freispiegelleitungen ( 4 ), bei der an das Ende einer Wasserdruckleitung ( 2 ) eine Strahlpumpe ( 5 ) mit anschließender Mischkammer ( 6 ) und nachfolgendem Entspannungsraum ( 8 ) so angeordnet ist, daß diese sich innerhalb eines Biofilters ( 1 ) befinden, wobei an dem Entspannungsraum ( 8 ) wenigstens eine Abflußleitung ( 7 ) möglichst nahe am Boden ( 9 ) angeordnet ist und der Entspannungsraum ( 8 ) durch einen gasdurchlässigen Boden ( 10 ) vom Filtermaterial ( 11 ) des Biofilters ( 1 ) getrennt ist und wenigstens eine Kanalluftleitung ( 12 ) von einem Auslaufschacht ( 3 ) und/oder einer Freispiegelleitung ( 4 ) zur Strahlpumpe ( 5 ) so angeordnet ist, daß die in diesen Bauteilen sich befindenden Gase mit Hilfe der Strahlpumpe ( 5 ) angesaugt werden, und mittels einer Sprühdüse ( 16 ) der Feuchtegehalt des Filtermaterials ( 11 ) geregelt wird.

2. Anordnung nach Anspruch 1,
**dadurch gekennzeichnet**,
daß die Strahlpumpe ( 5 ) und die Mischkammer ( 6 ) möglichst zentral im Biofilter ( 1 ), bevorzugterweise mittig angeordnet sind.

3. Anordnung nach Anspruch 1,
**dadurch gekennzeichnet**,
daß in der Mischkammer ( 6 ) wenigsten ein den Mischprozeß verstärkendes Einbauteil ( 13 ) angeordnet ist.

4. Anordnung nach Anspruch 1 oder 3,
**dadurch gekennzeichnet**,
daß das Einbauteil ( 13 ) in der Mischkammer ( 6 ) mindestens einen Durchbruch und die Form eines Tellers hat und von der Außenwand ( 14 ) der Mischkammer ( 6 ) konisch in Richtung Entspannungsraum ( 8 ) geformt ist.

5. Anordnung nach Anspruch 1,
**dadurch gekennzeichnet**,
daß der Abfluß ( 7 ) am Boden ( 9 ) soweit ansteigend ist, daß die Unterkante des Abflusses ( 7 ) mindestens die Höhe der Oberkante des Abflusses ( 7 ) am Ausgang aus dem Entspannungsraum ( 8 ) hat.

6. Anordnung nach Anspruch 1,
**dadurch gekennzeichnet**,
daß die Einmündung der Kanalluftleitung ( 12 ) an der Strahlpumpe ( 5 ) so angeordnet ist, daß die Strahlpumpe (5) an der Einmündung der Kanalluftleitung ( 12 ) einen Unterdruck erzeugt.

7. Anordnung nach Anspruch 1,
**dadurch gekennzeichnet**,
daß die Strahlpumpe ( 5 ) als Düse ausgebildet ist.

8. Anordnung nach Anspruch 1 oder 7,
**dadurch gekennzeichnet**,
daß der Querschnitt des Strömungskanales der Düse der Strahlpumpe ( 5 ) kleiner ist als der Querschnitt der Druckleitung ( 2 ), vorzugsweise die Hälfte bis vier Fünftel kleiner.

9. Anordnung nach Anspruch 1,
**dadurch gekennzeichnet**,
daß der Auslaufschacht ( 3 ) mindestens tagwasserdicht verschlossen ist.

10. Anordnung nach Anspruch 1
**dadurch gekennzeichnet**,
daß durch die Sprühdüse ( 16 ) mittels Wasser, bevorzugt Klarwasser, der optimale Feuchtegehalt im Filtermaterial (11) eingestellt wird.
